(19) **Europäisches Patentamt European Patent Office Office européen des brevets**

(11) **EP 3 834 603 B1**

(12) **EUROPEAN PATENT SPECIFICATION**

(45) Date of publication and mention of the grant of the patent:
**30.08.2023   Bulletin 2023/35**

(21) Application number: **20212836.9**

(22) Date of filing: **09.12.2020**

(51) International Patent Classification (IPC):
*A01F 15/08* (2006.01)        *G01S 13/50* (2006.01)
*G01S 13/88* (2006.01)

(52) Cooperative Patent Classification (CPC):
**A01F 15/0825; G01S 13/50; G01S 13/88;**
A01F 2015/0866

(54) **SYSTEM AND METHOD FOR ESTIMATING THE LENGTH OF A CROP MATERIAL BALE DURING BALE FORMATION**

SYSTEM UND VERFAHREN ZUM SCHÄTZEN DER LÄNGE EINES ERNTEGUTBALLENS WÄHREND DER BALLENBILDUNG

SYSTÈME ET PROCÉDÉ D'ESTIMATION DE LA LONGUEUR D'UNE BALLE DE MATÉRIAU RÉCOLTÉ LORS DE LA FORMATION DE LA BALLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **09.12.2019  IT 201900023379**

(43) Date of publication of application:
**16.06.2021   Bulletin 2021/24**

(73) Proprietor: **CNH Industrial Italia S.p.A.**
**10156 Torino (IT)**

(72) Inventors:
• **Ferrari, Luca**
  **41126 Modena (IT)**
• **Lenzini, Nicola**
  **41027 Pievepelago (MO) (IT)**

(74) Representative: **CNH Industrial IP Department**
**Leon Claeysstraat 3A**
**8210 Zedelgem (BE)**

(56) References cited:
WO-A1-2014/125029     WO-A1-2018/142628
AU-A4- 2010 101 429     ES-A1- 2 311 388

**Description**

FIELD OF THE INVENTION

The present subject matter relates generally to agricultural balers comprising systems for estimating the length of bales of crop material during bale formation and to methods of estimating the length of bales of crop material during bale formation within an agricultural baler.

BACKGROUND OF THE INVENTION

Agricultural balers are used to consolidate and package crop material to facilitate storage and handling of the crop material for later use. In the case of hay, a mower-conditioner is typically used to cut and condition the crop material for windrow drying in the sun. In the case of straw, an agricultural combine discharges non-grain crop material from the rear of the combine (such as wheat or oat straw), which is subsequently picked up by the baler. The cut crop material is typically raked and dried, and a baler, such as a large square baler or round baler, straddles the windrows and travels along the windrows to pick up the crop material and form it into bales. For instance, on a large square baler, a pickup unit at the front of the baler gathers the cut and windrowed crop material from the ground. A packer unit is used to move the crop material from the pickup unit to a duct or pre-compression chamber. For example, the packer unit is typically configured to form a wad or charge of crop material within the pre-compression chamber, which is then transferred to a main baling chamber. Within the main baling chamber, a plunger compresses the charges of crop material to form a bale and, at the same time, gradually advances the bale toward the outlet of the baling chamber.

During formation of the bale within the main baling chamber, the length of the bale is typically monitored to determine when to initiate the knotting cycle. Conventionally, such length measurements are performed using a "star wheel" sensor mounted to the top of the baling chamber. However, "star wheel" sensors are inherently low resolution sensors and suffer from various drawbacks, including measurement errors due to movement of the sensor during actuation and retraction of the plunger. As a result of such measurement errors, significant variability can exist in the length of the bales being formed within the chamber, as the knotting cycle or process may be initiated too early (resulting in a shorter bale) or too late (resulting in a longer bale) given the inability to accurately monitor the bale length during bale formation.

AU2010101429A4 describes a parallelepiped baler yield mapping system that facilitates the generation of yield maps, by recording material accumulation rates in the final stages of bale construction, within the bale chamber. Linear movement of material toward the rear of the bale chamber is continuously sensed by electronic encoders or position sensors. This movement is recorded per unit time by an electronic controller. The segments of data are assigned GPS co-ordinates by an on-board GPS receiver. The recorded data is post processed, correction factors applied, and a material weight is assigned to the data sets in order to generate a yield map of material baled for a given area.

WO 2014/125029 A1 discloses an agricultural baler and a corresponding method in accordance with the preambles of claims 1 and 7, respectively.

Accordingly, improved systems and related methods for estimating the length of a crop material bale as the bale is being formed with an agricultural baler would be welcomed in the technology.

BRIEF DESCRIPTION OF THE INVENTION

Aspects and advantages of the invention will be set forth in part in the following description, or may be obvious from the description, or may be learned through practice of the invention.

In one aspect, the present subject matter is directed to an agricultural baler as defined in appended claim 1.

In another aspect, the present subject matter is directed to a method for estimating the length of bales of crop material during bale formation within an agricultural baler as defined in appended claim 7.

Preferred aspects are defined in the dependent claims.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

BRIEF DESCRIPTION OF THE DRAWINGS

A full and enabling disclosure of the present invention, including the best mode thereof, directed to one of ordinary skill in the art, is set forth in the specification, which makes reference to the appended figures, in which:

FIG. 1 illustrates a perspective, partially cut-away view of one embodiment of an agricultural baler in accordance with aspects of the present subject matter;

FIG. 2 illustrates a schematic view of an internal baling chamber of the baler shown in FIG. 1, particularly illustrating a length sensor provided in operative association with the baling chamber of the baler in accordance with aspects of the present subject matter;

FIG. 3 illustrates a partial, schematic view of an upper portion of the baling chamber shown in FIG. 2, particularly illustrating the length sensor mounted to a wall of the baling chamber in accordance with aspects of the present subject matter;

FIG. 4 illustrates a sample data plot showing the voltage signal generated by the length sensor relative to time across multiple plunger actuations during the formation of a bale within the baling chamber of an agricultural baler in accordance with aspects of the present subject matter;

FIG. 5 illustrates a sample data plot showing the voltage signal generated by the length sensor relative to time across a single plunger actuation during the formation of a bale within the baling chamber of an agricultural baler in accordance with aspects of the present subject matter;

FIG. 6 illustrates a schematic view of one embodiment of a system for estimating the length of a crop material bale as the bale is being formed with an agricultural baler in accordance with aspects of the present subject matter; and

FIG. 7 illustrates a flow diagram of one embodiment of a method for estimating the length of a crop material bale as the bale is being formed with an agricultural baler in accordance with aspects of the present subject matter.

## DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the invention, which is defined by the appended claims. For instance, features illustrated or described as part of one embodiment can be used with another embodiment to yield a still further embodiment. Thus, it is intended that the present invention covers such modifications and variations as come within the scope of the appended claims.

In general, the present subject matter is directed to systems and methods for estimating the length of bales of crop material during bale formation within an agricultural baler. Specifically, the disclosed system and method utilizes a radar-based length sensor to transmit radar waves towards a bale of crop material being formed within a baling chamber of the agricultural baler and to receive return waves corresponding to the radar waves as reflected off the bale. By transmitting and receiving such waves as the bale advances within the baling chamber in a baling direction with each actuation of the associated plunger, the wave-related radar data collected by the length sensor is used to estimate the current length of the bale being formed within the chamber. In this regard, the radar-based bale length monitoring disclosed herein may allow for high resolution length measurements to be obtained with increased accuracy, thereby minimizing measurement errors and the resulting bale length variability.

For example, with each actuation of the plunger as a new charge of crop material is being delivered into the baling chamber, the bale will advance or move within baling chamber (and relative to the length sensor) in the baling direction while the length sensor continuously transmits radar waves towards the bale. With such bale movement, the frequency of the return waves received by the length sensor will be modulated due to the Doppler Effect, with such frequency modulation being indicative of the distance traveled by the bale within the baling chamber relative to the sensor. Specifically, the frequency is proportional to the speed or movement velocity of the bale within the baling chamber. Thus, by monitoring the frequency of the return waves received by the length sensor, the movement velocity of the bale can be determined with each actuation or stroke of the plunger. Thereafter, by knowing the time period across which the bale moved relative to the length sensor with actuation of the plunger, the distance traveled by the bale within the baling chamber can be determined as a function of the movement velocity, which can then be used to estimate or determine the current length of the bale within the baling chamber.

The above-described calculations or estimations are performed by a computing device or controller that is communicatively coupled to the radar-based length sensor. For instance, the controller may receive radar data from the length sensor and subsequently analyze such data to determine the distance the bale moves within the chamber within each actuation of the plunger. Thus, by summing the various distances associated with the plunger actuations performed during formation of the bale, the controller may estimate or determine the current length of the bale within the baling chamber. In this regard, once the controller determines that the current length of the bale is equal to or exceeds a predetermined bale length threshold (e.g., a desired bale length), the controller may control the operation of a knotting assembly of the baler (e.g., knotters and associated needles) to allow twine, string, cable or any other suitable elongated twine-like member (referred to hereinafter simply as "twine" for the sake of simplicity and without intent to limit) to be tied and wrapped around the formed bale.

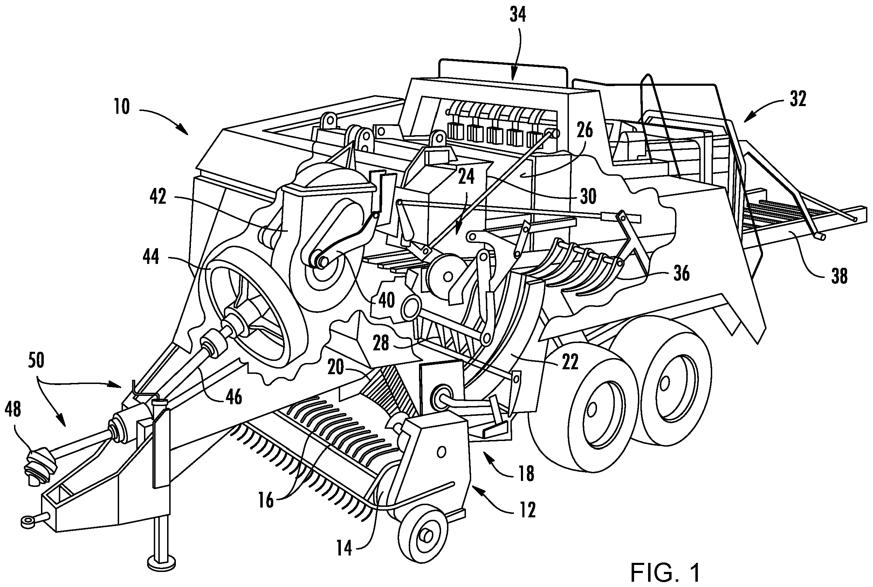

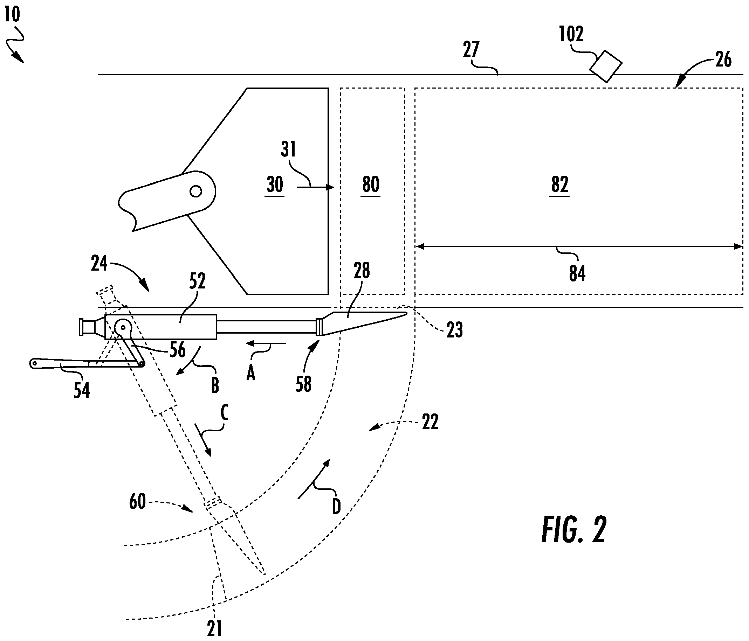

Referring now to the drawings, FIGS. 1 and 2 illustrate differing views of one embodiment of an agricultural baler 10 in accordance with aspects of the present subject matter. Specifically, FIG. 1 illustrates a perspective, partially cut-away view of the agricultural baler 10. Additionally, FIG. 2 illustrates a schematic, internal view of the baler components that allow for the two-stages of crop compression within the baler 10. In the illustrated embodiment, the baler 10 is configured as a rectangular baler. However, it should be appreciated that, in other embodiments, the baler 10 may have any other suitable baler configuration.

As particularly shown in FIG. 1, the baler 10 is configured to operate using a two-stage feeding system for intaking crop material and forming a bale therefrom. Specifically, crop material is lifted from windrows into the baler 10 using a pickup unit 12. In one embodiment, the pickup unit 12 includes a rotating pickup roll 14 with tines 16 which move the crop rearward toward a packer unit 18. An optional pair of stub augers (one of which is shown, but not numbered) is positioned above the pickup roll 14 to move the crop material laterally inward. Additionally, the packer unit 18 includes packer tines 20 which push the crop into an inlet 21 (FIG. 2) of a pre-compression chamber 22 to form a wad or charge of crop material. Specifically, the packer tines 20 intertwine the crop together and pack the crop within the pre-compression chamber 22, with the pre-compression chamber 22 and the packer tines 20 generally functioning as the first stage of crop compression within the baler 10.

Once a sufficient charge of crop material or "bale charge" 80 (FIG. 2) has been formed within the pre-compression chamber 22, a stuffer assembly 24 moves the charge of crop material through an outlet 23 (FIG. 2) of the pre-compression chamber 22 to a main baling chamber 26 of the baler 10. As particularly shown in FIG. 2, the stuffer assembly 24 includes stuffer forks 28 which thrust the bale charge 80 directly in front of an actuating mechanism, such as a plunger 30, which reciprocates back and forth relative to the baling chamber 26 to compress each new charge of crop material 80 into a bale 82. Specifically, the plunger 30 is actuated in a baling direction (indicated by arrow 31 shown in FIG. 2) to compress the bale charge 80 into the bale 82 being currently formed within the baling chamber 26. The stuffer forks 28 are returned to their original stationary state after each bale charge 80 has been moved into the baling chamber 26. With each delivery of a bale charge 80 into the baling chamber 26, the plunger 30 is acuated in the baling direction 31 to compress the charge of crop material into the bale 82 and, at the same time, gradually advances the bale 82 towards an outlet 32 (FIG. 1) of the baling chamber 26. The baling chamber 26 and the plunger 30 generally function as the second stage if crop compression within the baler 10.

It should be appreciated that the stuffer forks 28 of the stuffer assembly 26 may generally be configured to be actuated relative to the pre-compression chamber 22 using any suitable actuation means known in the art. For instance, in the embodiment shown in FIG. 2, the stuffer assembly 26 includes a first stuffer actuator 52 (e.g., a hydraulic cylinder or motor) coupled to the stuffer forks 28 and a second stuffer actuator 54 (e.g., a hydraulic cylinder or motor) coupled to the first stuffer actuator 52 via a lever 56. In such an embodiment, by controlling the extension/retraction of the stuffer actuators 52, 54, the stuffer forks 28 may be moved or actuated relative to the pre-compression chamber 22 to allow a charge of crop material to be formed therein and to also permit the charge of crop material to be pushed upwardly into the main baling chamber 26.

For instance, the stuffer forks 28 are shown in FIG. 2 at a loading position 58 (indicated by the solid lines) at which the stuffer forks 28 essentially cover or close the outlet 23 of the pre-compression chamber 22, thereby allowing crop material entering the chamber 22 via the chamber inlet 21 to be compressed therein. Once a sufficient charge of crop material has been compressed into the chamber 22, the first stuffer actuator 52 may be initially retracted to move the stuffer forks 28 away from the chamber outlet 23 (e.g., in direction A), which then allows the first stuffer actuator 52 (and, thus, the stuffer forks 28 coupled thereto) to be pivoted downwardly (e.g., in pivot direction B) via retraction of the second stuffer actuator 54. Once the stuffer forks 28 have been pivoted downwardly to their lowermost position, the first stuffer actuator 52 can then be extended to actuate the stuffer forks 28 outwardly again towards the pre-compression chamber 22 (e.g., in direction C) to the charging position 60 (indicated by the dashed lines). Thereafter, with the first stuffer actuator 52 maintained at the extended position, the second stuffer actuator 54 can be extended to pivot the stuffer forks 28 upwardly (e.g., in pivot direction D), thereby allowing the stuffer forks 28 to sweep upwardly along a curved path following the curved shape of the pre-compression chamber 22 to push the charge of crop material through the chamber outlet 23 and into the baling chamber 26. With the stuffer forks 28 back to the loading position 58, the process can be repeated to allow a new charge of material to be compressed within the pre-compression chamber 22 and subsequently pushed into the main baling chamber 26 via actuation of the stuffer forks 28.

It should also be appreciated that the plunger 30 may be configured to be actuated relative to the baling chamber 26 using any suitable reciprocation or actuation means known in the art. For instance, in the embodiment shown in FIG. 1, the plunger 30 is connected via a crank arm 40 to a gear box 42. The gear box 42 is driven by a flywheel 44, which, in turn, is connected via a drive shaft 46 with a power take-off (PTO) coupler 48. The PTO coupler 48 is detachably connected with the PTO spline at the rear of the associated traction unit, such as a tractor (not shown). The PTO coupler 48, the drive shaft 46, and the flywheel 44 collectively define a portion of a driveline 50, which provides rotative power to the gearbox 42. The flywheel 44 has a sufficient mass to carry the plunger 30 through a compression stroke as power is applied to the drive shaft 46 by the traction unit (not shown).

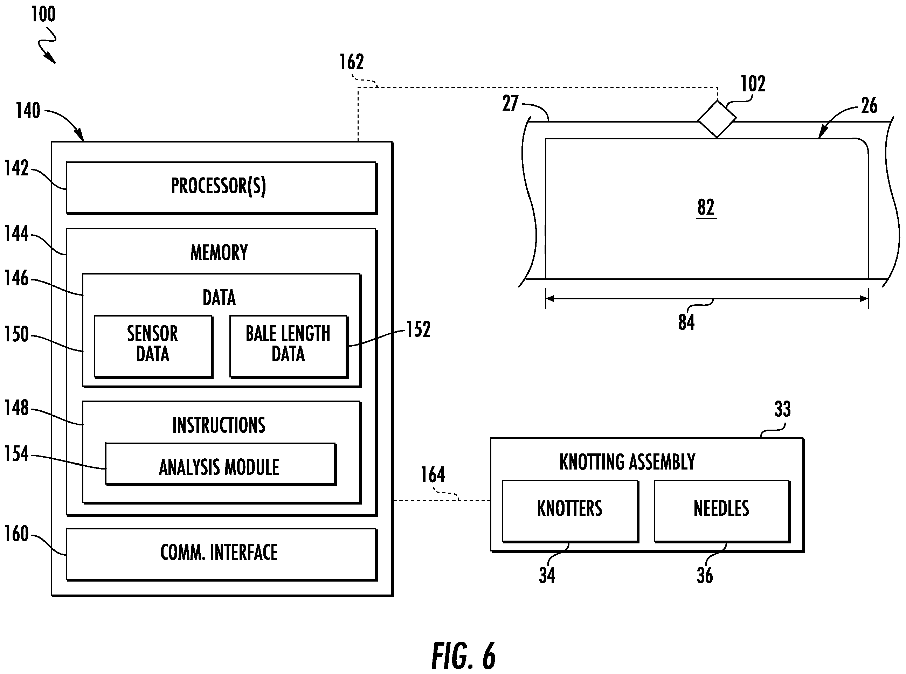

When a formed bale 82 reaches a predetermined length within the baling chamber 26 (e.g., as determined using one or more embodiments of the length sensor disclosed herein), a knotting assembly 33 (FIG. 6) of the baler 10 can be used to tie-up the bale. Specifically, knotters 34 (FIG. 1) of the knotting assembly 33 can be actuated which wrap and tie twine around the bale while it is still in the baling chamber 26. Additionally, needles 36 (FIG. 1) of the knotting assembly 33 are used to bring the lower twine up to the knotters 34 and the tying process takes place. The twine is cut and the formed bale is ejected from a discharge chute 38 (FIG. 1) of the baler as a new bale is being formed within the baling chamber 26.

Additionally, as will be described in greater detail below, length sensor 102 is provided in operative association with the baling chamber 26 for sensing or detecting one or more parameters associated with a current length 84 (FIG. 2) of the bale 82 being formed therein. The length sensor 102 is a radar-based length sensor configured to transmit radar waves towards the bale 82 being formed within the baling chamber 26 and receive return waves corresponding to the radar waves as reflected off the bale 82. The wave-related radar data associated with the return waves received by the length sensor 102 are then used to estimate the current length 84 of the bale 82 within the baling chamber 26 as the bale 82 is advanced relative to the sensor 102 in the baling direction 31 with each stroke or actuation of the plunger 30.

The length sensor 102 is generally configured to be located within or adjacent to the baling chamber 26, such as by mounting the length sensor 102 to a wall(s) of the baling chamber 26. For instance, as shown in FIG. 2, the length sensor 102 is mounted to or otherwise supported by a top wall 27 of the baling chamber 26, such as at the same or a similar position that a conventional "star wheel" measurement device would be located. As a result, as the bale 82 advances through the baling chamber 26 with the addition of each new bale charge 80, the length sensor 102 may be used to detect parameters associated with the length of the bale 82. However, it should be appreciated that, in other embodiments, the length sensor 102 may be positioned at any other suitable location relative to the baling chamber 26 that allows the sensor 102 to generally function as described herein.

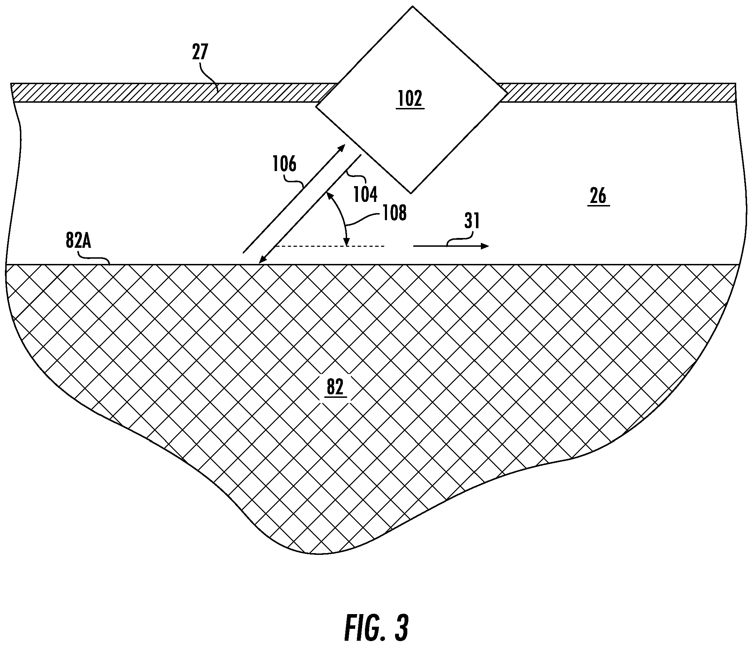

Referring now to FIG. 3, a partial, schematic view of an upper portion of the baling chamber 36 shown in FIG. 2 is illustrated in accordance with aspects of the present subject matter, particularly illustrating the length sensor 102 positioned relative to a bale 82 being formed within the baling chamber 26. As shown, the length sensor 102 is mounted to the top wall 27 of the baling chamber 26 such that the sensor 102 has a field of view or line-of-sight oriented towards a top side 82A of the bale 82 being formed within the chamber 26. However, as indicated above, the length sensor 102 may be mounted at any other suitable location relative to the baling chamber 26 that allows the sensor 102 to have a field of view or line-of-sight directed towards a portion of the bale 82, such as by coupling the sensor 102 to one of the sidewalls of the chamber 26 or the bottom wall of the chamber 26.

As indicated above, the length sensor 102 is a radar-based length sensor configured to transmit radar waves (indicated by arrow 104) towards the adjacent portion of the bale 82 and receive return waves (indicated by arrow 106) corresponding to the radar waves 104 as reflected off the bale 82. As shown in FIG. 3, in one embodiment, the length sensor 102 may be oriented relative to the baling chamber 26 and/or the adjacent bale 82 such that the radar waves 104 are transmitted at an acute transmission angle 108 relative to the baling direction 31. For instance, the length sensor 102 may be supported relative to the baling chamber 26 such that the radar waves 104 are transmitted at the acute transition angle 108 in a direction opposite the baling direction 31.

During operation of the baler 10, with each actuation of the plunger 30 as a new charge of crop material is delivered into the baling chamber 26, the bale 82 will advance or move relative to the length sensor 102 in the baling direction 31 while the length sensor 102 continuously transmits radar waves 104 towards the bale 82. With such bale movement, the frequency of the return waves 106 received by the length sensor 102 will be modulated due to the Doppler Effect, with such frequency modulation being indicative of the distance traveled by the bale 82 relative to the sensor 102 within the baling chamber 26. Specifically, the frequency is proportional to the speed or movement velocity of the bale 82 within the baling chamber 26. Thus, by monitoring the frequency of the return waves 106 received by the length sensor 102, the movement velocity of the bale 82 can be determined with each actuation or stroke of the plunger 30. Thereafter, by knowing the time period across which the bale 82 is moved relative to the length sensor 102 due to the actuation of the plunger 30, the distance traveled by the bale 82 within the baling chamber 26 can be determined as a function of the movement velocity. For instance, the equations below provide relationships between the detected frequency of the return waves 106 received by the length sensor 102 and the bale movement velocity (Equation 1) and between the bale movement velocity and the distance traveled by the bale 82 within the baling chamber 26.

$$v = \frac{f_d * c}{2 * f_c * cos(\theta)} \qquad (1)$$

$$d = v * t \qquad (2)$$

wherein, *v* corresponds to the movement velocity of the bale 82 within the baling chamber 26, $f_d$ corresponds to the doppler frequency of the return waves 106 received by the length sensor 102, *c* corresponds to the speed of light, $f_c$ corresponds to the carrier frequency of the radar-based length sensor 102, $\theta$ corresponds to the transmission angle 108 at which the radar waves 104 are transmitted relative to the baling direction 31, *d* corresponds to the distance moved by the bale 82 in the baling direction 31 relative to the sensor 102, and *t* corresponds to the time period across which the bale 82 was moving at the velocity (*v*).

It should be appreciated that, due to the manner in which the baler 10 is operated, the length or size of the bale 82 grows incrementally with each actuation of the plunger 30 as a new charge of material is being compressed into the existing bale 82 being formed within the baling chamber 26. As such, the distance moved by the bale 82 (e.g., as calculated per Equation 2) with each actuation of the plunger 30 generally corresponds to an incremental length adjustment distance (*d*) across which the length of the bale 82 was increased due to the addition of the new charge of crop material within the baling chamber 26. Thus, it should be appreciated that, as the plunger 30 is reciprocated back and forth to allow new charges of material to be delivered into the baling chamber 26 and subsequently compressed into the bale 82 being formed therein, the incremental length adjustment distance calculated for the current plunger actuation may be summed with the incremental length adjustment distances calculated for previous plunger actuations associated with the formation of the current bale 82 to allow the current length of the bale 82 to be estimated or inferred. For instance, as provided below in Equation 3, each incremental length adjustment distance calculated for the bale 82 being formed may be summed to determine a total bale distance across which the bale 82 has moved relative to the length sensor 102 in the baling direction 31.

$$d_{total} = d_1 + d_2 + d_3 + \ldots + d_n \qquad (3)$$

wherein, $d_{total}$ corresponds to the total bale distance across which the bale 82 has moved relative to the length sensor 102 during the bale's formation within the baling chamber 26, *d* corresponds to the incremental length adjustment distance across which the bale 82 moved relative to the length sensor 102 with each individual plunger actuation, and *n* generally corresponds to the number of plunger actuations occurring during formation of the current bale 82.

It should be appreciated that, depending on the relative location of the length sensor 102 within the baling chamber 26, the total bale distance calculated using Equation 3 may correspond to the current length of the bale 82 within the baling chamber 26 or may be used to estimate the current length of the bale 82. For example, in certain instances, the length sensor 102 may be positioned within the baling chamber 26 such that only a percentage of the length of the bale 82 being formed therein (e.g., 50-75%) is advanced past the length sensor 102 prior to the bale 82 reaching its desired length. In such instance, when the total bale distance calculated based on the return waves 106 received at the length sensor 102 is equal to this predetermined percentage of the bale length, it may be inferred that the current length of the bale 82 being formed within the baling chamber 26 is equal to the desired bale length.

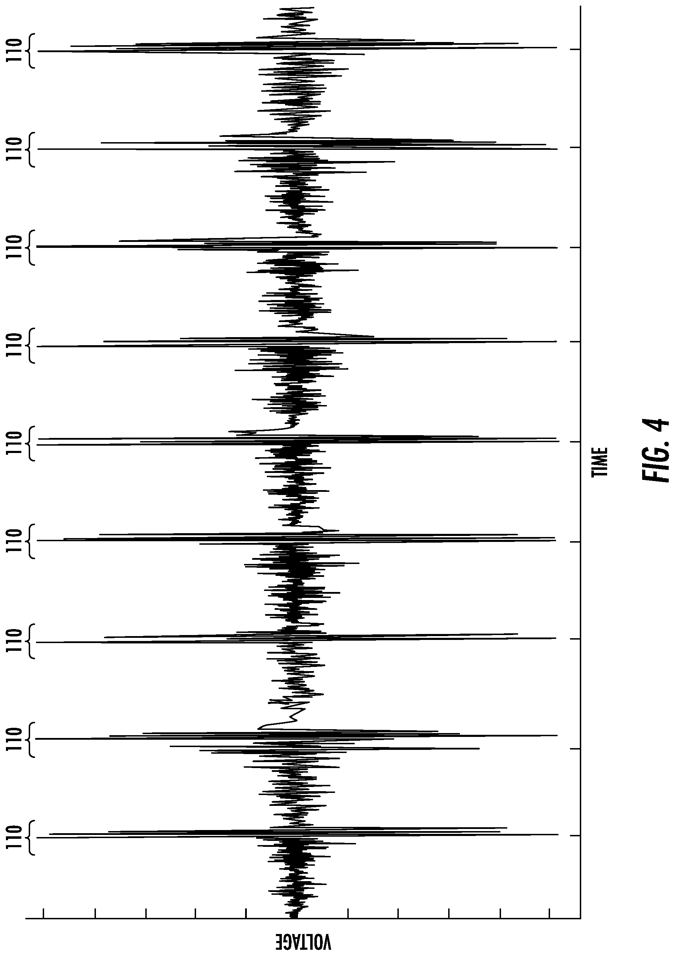

Referring now to FIG. 4, a sample data plot showing the voltage signal generated by the length sensor 102 (which can be correlated to the frequency of the return waves 106 (FIG. 3) received by the length sensor 102) (y-axis) relative to time (x-axis) during the formation of a bale 82 within the baling chamber 26 is illustrated in accordance with aspects of the present subject matter. It should be appreciated that the data plot shown in FIG. 4 is simply illustrated to provide an example data plot for purposes of discussion. The data associated with the return waves 106 received by the length sensor 102 may vary from that shown in FIG. 4.

As shown in the example data plot, the variation in the voltage signal associated with the frequency of the return waves 106 received by the length sensor 102 exhibits a periodic or repeating pattern that generally corresponds to the frequency or interval at which the plunger 30 is being actuated relative to the baling chamber 26. Specifically, as shown in FIG. 4, the voltage spikes or increases (e.g., at peak ranges 110) along short time periods corresponding to when the plunger 30 is being actuated in the baling direction 31 to compress a new charge of crop material into the bale 82 being formed within the baling chamber 26, which results in the bale 82 being pushed or advanced in the baling direction 31 relative to the sensor 102 by a given distance (e.g., the incremental length adjustment distance). Thus, each peak range 110 is generally associated with a change in the current length of the bale 82 being formed within the baling chamber 26.

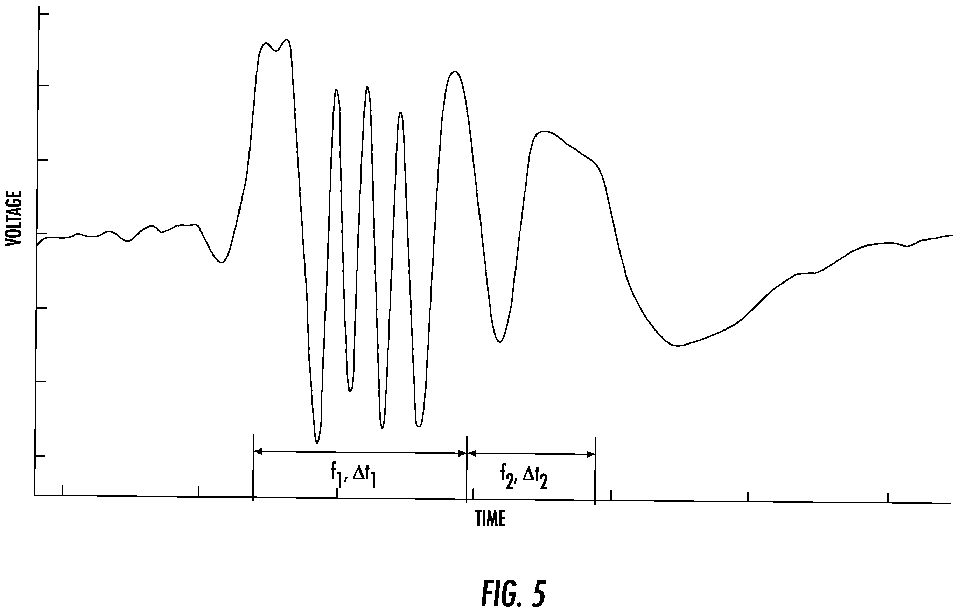

Referring now to FIG. 5, another sample data plot showing the voltage signal generated by the length sensor 102 (which can be correlated to the frequency of the return waves 106 (FIG. 3) received by the length sensor 102) (y-axis) relative to time (x-axis) during the formation of a bale 82 within the baling chamber 26 is illustrated in accordance with aspects of the present subject matter. However, unlike the sample data plot shown in FIG. 4 which provides example data across multiple plunger actuations during the formation of a bale 82, the data plot shown in FIG. 5 provides example data for a single plunger actuation (e.g., voltage data associated with the time period extending across one of the peak ranges 110 shown in FIG. 4). It should be appreciated that the data plot shown in FIG. 5 is simply illustrated to provide an example data plot for purposes of discussion. The data associated with the return waves 106 received by the length sensor 102 may vary from that shown in FIG. 5.

As shown in FIG. 5, during each plunger actuation, the voltage signal associated with the frequency of the return waves 106 received by the length sensor 102 (and, thus, the movement velocity of the bale 82) may vary across the overall compression stroke of the plunger 30. For instance, in the illustrated data plot, the return wave or radar data has a first average frequency ($f_1$) across a first time period ($\Delta t_1$) and a second average frequency ($f_2$) across a second time period ($\Delta t_2$), with the first average frequency ($f_1$) differing significantly from the second average frequency ($f_2$) (e.g., by being significantly higher than the second average frequency ($f_2$)). Such difference in the average frequency may be due to the compression cycle of the crop material as the plunger 30 is being actuated in the baling direction 31. For instance, the higher, first average frequency ($f_1$) may be associated with a time period (e.g., the first time period ($\Delta t_1$)) across which the plunger 30 is being initially actuated and begins to compress the new charge of crop material into the bale 82, such as during the first 60%-90% of the compression stroke of the plunger 30. In contrast, the lower, second average frequency ($f_2$) may be associated with a time period (e.g., the second time period ($\Delta t_2$)) across which the plunger 30 is being actuated along the final portion of its compression stroke and during which the compressive forces within the bale 82 increase significantly while the bale movement velocity is reduced.

With such varying frequencies along the compression stroke the plunger 30, it may be desirable to analyze the frequency data across two or more time periods corresponding to different portions or sections of the stroke of the plunger 30 when determining the total distance (e.g., the incremental length adjustment distance) across which the bale 82 has moved relative to the length sensor 102 during a given plunger actuation. For instance, in the illustrated embodiment, the first average frequency ($f_1$) may be used to calculate a first movement velocity for the bale 82 (e.g., via Equation 1), which can then be used together with the first time period ($\Delta t_1$) to calculate a first distance across which the bale 82 moved during such time period (e.g., via Equation 2). Similarly, the second average frequency ($f_2$) may be used to calculate a second movement velocity for the bale 82 (e.g., via Equation 1), which can then be used together with the first time period ($\Delta t_2$) to calculate a second distance across which the bale 82 moved during such time period (e.g., via Equation 2). The first and second distances may then, for example, be summed to calculate the total distance (e.g., the incremental length adjustment distance) across which the bale 82 moved during the relevant plunger actuation.

It should be appreciated that, although the above-described analysis relies upon splitting or dividing the relevant frequency data into two different time periods, the data may, instead, be considered collectively along the entire time period associated with the full compression stroke of the plunger 30 or may be split or divided into any other number of time periods, such as three or more time periods. For example, in instances in which the frequency data is highly variable, average frequency values may be determined over a larger number of shorter time periods to provide a more accurate estimate of the total distance across which the bale 82 moves during a given plunger actuation.

It should also be appreciated that, in certain instances, the bale 82 being formed within the baling chamber 26 may have a tendency to relax slightly as the plunger 30 is being retracted away from the bale 82 to allow a new charge of crop material to be delivered into the baling chamber 26. In such instances, the radar data received by the length sensor 102 may also be analyzed to estimate or determine the relaxation distance of the bale 82 (i.e., the distance the bale 82 moved in the direction opposite the baling direction 31 following retraction of the plunger 30). In one implementation of the present subject matter, when bale relaxation is detected, the associated relaxation distance may be used to calculate a final incremental length adjustment distance associated with a given plunger actuation. For instance, the relaxation distance of the bale 82 following retraction of the plunger 30 may be used to adjust the distance across which the bale 82 moved in the baling direction 31 during actuation of the plunger 30 to calculate the final incremental length adjustment distance associated with such plunger actuation. This final distance value may then be used as the estimate for the amount of bale growth or the increase in the bale length occurring for the previous plunger actuation.

Referring now to FIG. 6, a schematic view of one embodiment of a system 100 for estimating the length of a bale of crop material during bale formation within an agricultural baler is illustrated in accordance with aspects of the present subject matter. For purposes of description, the system 100 will generally be described herein with reference to the baler 10 described above with reference to FIGS. 1 and 2 and the length sensor 102 described above with reference to FIGS. 2 and 3. However, it should be appreciated that the disclosed system 100 may generally be utilized with any baler have any suitable baler configuration and/or any length sensor have any other suitable sensor configuration.

In general, the system 100 includes a length sensor provided in operative association with the baling chamber 26 to provide data associated with the length of the bale of crop material being formed therein. The length sensor is configured as a radar-based length sensor, such as the length sensor 102 described above with reference to FIGS. 2 and 3. Thus, the length sensor 102 is configured to transmit radar waves towards the adjacent portion of the bale 82 being formed within the baling chamber 26 and receive return waves corresponding to the radar waves as reflected off the bale 82.

Moreover , the system 100 also includes one or more processor-based or computing devices for receiving and subsequently processing the wave-related data (or "radar data") generated by the length sensor 102. As shown in FIG. 6, the system 100 includes a controller 140 communicatively coupled to length sensor 102 for receiving radar data from the length sensor 102 associated with the frequency of the return waves 106 (FIG. 3) detected or received by the length sensor 106.

The controller 140 is configured to analyze the radar data received from the length sensor 102 to estimate the current length of the bale 82 being formed within the baling chamber 26. For instance, as described above with reference to Equations 1 and 2, the controller 140 may be configured to analyze the frequency of the return waves 106 received by the length sensor 102 to determine the speed or movement velocity of the bale 82 within the baling chamber 26, which may then be used to calculate or estimate the distance (e.g., the incremental length adjustment distance) across which the bale 82 moved in association with the previous plunger actuation. By calculating the incremental length adjustment distance associated with each plunger actuation as the bale 82 is being formed within the baling chamber 26, the controller 140 may estimate the current length 84 of the bale 82 within the chamber 26 by summing the individual incremental length adjustment distances together. Once the controller 140 determines that the current bale length 84 is equal to or exceeds a predetermined length threshold (e.g., a desired bale length), the controller 140 may, for instance, execute a suitable control action to complete the bale formation process, such as by controlling the operation of the knotting assembly 33 to wrap and tie twine around the formed bale 82 while it is still in the baling chamber 26.

In general, the controller 140 may correspond to any suitable processor-based device(s), such as a computing device or any combination of computing devices. Thus, as shown in FIG. 6, the controller 140 may generally include one or more processor(s) 142 and associated memory devices 144 configured to perform a variety of computer-implemented functions (e.g., performing the methods, steps, algorithms, calculations and the like disclosed herein). As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the memory 144 may generally comprise memory element(s) including, but not limited to, computer readable medium (e.g., random access memory (RAM)), computer readable non-volatile medium (e.g., a flash memory), a floppy disk, a compact disc-read only memory (CD-ROM), a magneto-optical disk (MOD), a digital versatile disc (DVD) and/or other suitable memory elements. Such memory 144 may generally be configured to store information accessible to the processor(s) 142, including data 146 that can be retrieved, manipulated, created and/or stored by the processor(s) 142 and instructions 148 that can be executed by the processor(s) 142.

In several embodiments, the data 146 may be stored in one or more databases. For example, the memory 144 may include a sensor database 150 for storing data received from one or more sensors of the disclosed system 100. For example, in one embodiment, the radar data received from the length sensor 102 may be stored within the sensor database 150, such as frequency data associated with the return waves 106 (FIG. 3) received by the length sensor 102. Additionally, suitable data derived from the sensor data may also be stored within the sensor database 150. For instance, in one embodiment, data associated with movement velocity of the bale 82, as determined based on the frequency data, may be stored within the sensor database 150

Additionally, as shown in FIG. 6, the memory 144 may include a bale length database 152 for storing information related to the length of each bale 82 formed within the baling chamber 26. For instance, as indicated above, by analyzing the frequency data associated with each plunger actuation as a bale 82 is being formed within the baler 10, the distance (e.g., the incremental length adjustment distance) across which the bale 82 is moved relative to the length sensor 102 may be determined. In such embodiments, the incremental length adjustment distance associated with each plunger actuation may be stored within the bale length database 152. Additionally, the current length estimated for the bale 82 (e.g., based on the sum of the incremental length adjustment distances associated with the various plunger actuations performed during formation of such bale) may also be stored within the bale length database 152.

Referring still to FIG. 6, in several embodiments, the instructions 148 stored within the memory 144 of the controller 140 may be executed by the processor(s) 142 to implement a data analysis module 154. In general, the data analysis module 154 may be configured to analyze the radar data received from length sensor 102 to estimate the length of the bale 82 that is currently being formed within the baling chamber 26. For instance, the controller 140 may include mathematical expressions (e.g., Equations 1 and 2) and/or look-up tables stored within its memory 144 that correlate the frequency data associated with the return waves 106 (FIG. 3) received from the length sensor 102 to the distance (e.g., the incremental length adjustment distance) across which the bale 82 is moved relative to the length sensor 102 during a given plunger actuation. The data analysis module 154 may then sum the various incremental length adjustment distances to calculate or estimate the current length of the bale 82 being formed within the baling chamber 26.

Additionally, it should be appreciated that, in several embodiments, the controller 140 may also be configured to actively control the operation one or more components of the baler 10. For instance, in several embodiments, the controller 140 may be configured to control the operation of the knotting assembly 33 of the baler 10 based on the estimated length of the bale 82 currently being formed within the baler 10. Specifically, in several embodiments, with each incremental adjustment in the length of the bale 82 following actuation of the plunger 30, the controller 140 may compare the newly calculated bale length to a predetermined bale length threshold (e.g., a desired bale length). Once it is determined that the current length of the bale 82 within the baling chamber 26 is equal to or exceeds the predetermined bale length threshold, the controller 140 may be configured to control the operation of the knotting assembly 33, such as by actuating the knotters 34 and the needles 36 of the knotting assembly 33, to wrap and tie twine around the formed bale 82 while it is still in the baling chamber 26. The twine may then be cut and to allow the blade 82 to be ejected from the discharge chute 38 (FIG. 1) of the baler 10.

Moreover, as shown in FIG. 6, the controller 140 may also include a communications interface 160 to provide a means for the controller 140 to communicate with any of the various other system components described herein. For instance, one or more respective communicative links or interfaces 162 (e.g., one or more data buses) may be provided between the communications interface 160 and the length sensor 102 to allow radar data to be transmitted from the sensor 102 to the controller 140. Additionally, as shown in FIG. 6, one or more respective communicative links or interfaces 164 (e.g., one or more data buses) may be provided between the communications interface 160 and the knotting assembly 33 to allow the controller 140 to transmit control signals for controlling the operation of the knotting assembly 33.

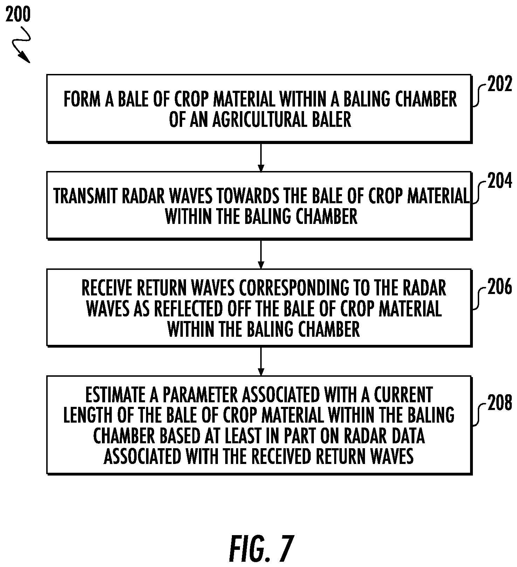

Referring now to FIG. 7, a flow diagram of one embodiment of a method 200 for estimating the length of a bale of crop material during bale formation within an agricultural baler is illustrated in accordance with aspects of the present subject matter. In general, the method 200 will be described herein with reference to the baler 10 and the embodiments of the system 100 described above with reference to FIGS. 1-3 and 6. However, it should be appreciated by those of ordinary skill in the art that the disclosed method 200 may generally be implemented with any agricultural baler having any suitable baler configuration and/or any system having any suitable system configuration. In addition, although FIG. 7 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the invention, which is defined by the appended claims.

As shown in FIG. 7, at (202), the method 200 includes forming a bale of crop material within a baling chamber of an agricultural baler. As indicated above, each bale may be formed by a plurality of bale charges, with each bale charge being separately delivered into the baling chamber (e.g., via the stuffer assembly 24). As each bale charge is delivered into the baling chamber 26, a plunger 30 is actuated (e.g., in a baling direction 31) to compress the bale charge into the bale being formed within the chamber 26.

Additionally, at (204), and (206), the method 200 includes transmitting radar waves towards the bale of crop material within the baling chamber and receiving return waves corresponding to the radar waves as reflected off the bale of crop material within the baling chamber. As indicated above, a radar-based length sensor 102 is mounted or otherwise supported relative to the baling chamber 26 in a manner that allows the sensor 102 to transmit radar waves towards the adjacent bale being formed within the chamber 26. The radar waves reflected off the bale are then received by the length sensor 102 as return waves.

Moreover, at (208), the method 200 includes estimating a parameter associated with a current length of the bale of crop material within the baling chamber based at least in part on radar data associated with the received return waves. The parameter associated with a current length of the bale of crop material is the current length of the bale of crop material. Specifically, as indicated above, the radar collected by the length sensor 102 may be transmitted to a computing device or controller 140 for subsequent processing and analysis. For instance, the controller 140 may be configured to analyze the frequency of the return waves received by the length sensor 102 to determine the speed or movement velocity of the bale within the baling chamber 26, which may then be used to calculate or estimate the distance (e.g., the incremental length adjustment distance) across which the bale moved in association with the previous plunger actuation. Additionally, by calculating the incremental length adjustment distance associated with each plunger actuation as the bale is being formed within the baling chamber, the controller 140 may estimate the current length of the bale within the chamber 26 by summing the individual incremental length adjustment distances together.

It is to be understood that the steps of the method 200 are performed by the controller 140 upon loading and executing software code or instructions which are tangibly stored on a tangible computer readable medium, such as on a magnetic medium, e.g., a computer hard drive, an optical medium, e.g., an optical disc, solid-state memory, e.g., flash memory, or other storage media known in the art. Thus, any of the functionality performed by the controller 140 described herein, such as the method 200, is implemented in software code or instructions which are tangibly stored on a tangible computer readable medium. The controller 140 loads the software code or instructions via a direct interface with the computer readable medium or via a wired and/or wireless network. Upon loading and executing such software code or instructions by the controller 140, the controller 140 may perform any of the functionality of the controller 140 described herein, including any steps of the method 200 described herein.

The term "software code" or "code" used herein refers to any instructions or set of instructions that influence the operation of a computer or controller. They may exist in a computer-executable form, such as machine code, which is the set of instructions and data directly executed by a computer's central processing unit or by a controller, a human-understandable form, such as source code, which may be compiled in order to be executed by a computer's central processing unit or by a controller, or an intermediate form, such as object code, which is produced by a compiler. As used herein, the term "software code" or "code" also includes any human-understandable computer instructions or set of instructions, e.g., a script, that may be executed on the fly with the aid of an interpreter executed by a computer's central processing unit or by a controller.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art.

**Claims**

1. An agricultural baler (10) including a baling chamber (26), comprising a system (100) for estimating the length of bales of crop material (82) during bale formation, wherein the bale of crop material (82) is formed from a plurality bale charges (80) separately delivered into the baling chamber (26), the agricultural baler (10) further comprising a plunger (30) configured to be actuated relative to the baling chamber (26) in a baling direction (31) as each bale charge (80) of the plurality of bale charges (80) is delivered into the baling chamber (26) to compress each said bale charge (80) into the bale of crop material (82) being formed within the baling chamber (26), the system (100) being **characterized by**;

   a radar-based length sensor (102) provided in operative association with the baling chamber (26), the length sensor (102) configured to transmit radar waves (104) towards a bale of crop material (82) being formed within the baling chamber (26) and receive return waves (106) corresponding to the radar waves (104) as reflected off the bale of crop material (82); and
   a controller (140) communicatively coupled to the length sensor (102), the controller (140) being configured to, based at least in part on radar data associated with the return waves (106) received by the length sensor (102),

   determine a movement velocity of the bale of crop material (82) within the baling chamber (26) with each actuation of the plunger (30) relative to the baling chamber (26) in the baling direction (31), and
   estimate a current length (84) of the bale of crop material (82) being formed within the baling chamber (26).

2. The system (100) as in claim 1, wherein, as each said bale charge (80) is compressed into the bale of crop material (82) being formed within the baling chamber (26), the controller (140) is configured to determine an incremental length adjustment distance of the bale of crop material (82) within the baling chamber (26) based at least in part on the radar data.

3. The system (100) as in claim 2, wherein the controller (140) is configured to estimate the current length (84) of the bale of crop material (82) by summing the incremental length adjustment distances determined in association with each said bale charge (80) that is compressed into the bale of crop material (82) being formed within the baling chamber (26).

4. The system (100) as in claim 2, wherein the incremental length adjustment distance is determined at least in part by calculating a distance the bale of crop material (82) is moved relative to the length sensor (102) within the baling chamber (26) in the baling direction (31).

5. The system (100) as in claim 4, wherein the controller (140) is further configured to calculate a distance that the bale of crop material (82) is moved relative to the length sensor (102) based at least in part on the movement velocity, the current length (84) of the bale of crop material (82) being estimated based at least in part on the calculated distance.

6. The system (100) as in any preceding claim, wherein the controller (140) is further configured to compare the current length (84) of the bale of crop material (82) to a predetermined bale length threshold, the controller (104) being configured to control an operation of a knotting assembly (33) of the agricultural baler (10) to wrap and tie twine around the bale of crop material (82) when the current length (84) of the bale of crop material (82) is equal to or exceeds the predetermined bale length threshold.

7. A method (200) of estimating the length of bales of crop material (82) during bale formation within an agricultural baler (10), the method including forming a bale of crop material (82) from a plurality of bale charges (80) separately delivered into a baling chamber (26) of the agricultural baler (10), wherein forming the bale of crop material (82) within the baling chamber (26) comprises actuating a plunger (30) relative to the baling chamber (26) in a baling direction (31) as each bale charge (80) of the plurality of bale charges (80) is delivered into the baling chamber (26) to compress each said bale charge (80) into the bale of crop material (82), the method (200) being **characterized by**:

transmitting radar waves (104) towards the bale of crop material (82) within the baling chamber (26);

receiving return waves (106) corresponding to the radar waves (104) as reflected off the bale of crop material (82) within the baling chamber (26); and

based at least in part on radar data associated with the return waves (106) received by the length sensor (102), determining a movement velocity of the bale of crop material (82) within the baling chamber (26) with each actuation of the plunger (30) relative to the baling chamber (26) in the baling direction (31), and estimating a current length (84) of the bale of crop material (82) within the baling chamber (26) based at least in part on radar data associated with the received return waves (106).

8. The method (200) as in claim 7, wherein estimating the current length (84) of the bale of crop material (82) within the baling chamber (26) comprises determining, with each said bale charge (80) being compressed into the bale of crop material (82), an incremental length adjustment distance of the bale of crop material (82) within the baling chamber (26) based at least in part on the radar data.

9. The method (200) as in claim 8, further comprising estimating the current length (84) of the bale of crop material (82) by summing the incremental length adjustment distances determined in association with each said bale charge (80) that is compressed into the bale of crop material (82).

10. The method (200) as in claim 8, wherein determining the incremental length adjustment distance comprises calculating a distance the bale of crop material (82) is moved within the baling chamber (26) in the baling direction (31) based at least in part on the radar data.

11. The method (200) as in any of claims 7 through 10, further comprising comparing the current length (84) of the bale of crop material (82) to a predetermined bale length threshold and controlling an operation of a knotting assembly (33) of the agricultural baler (10) to wrap and tie twine around the bale of crop material (82) when the current length (84) of the bale of crop material (82) is equal to or exceeds the predetermined bale length threshold.


**Patentansprüche**

1. Landwirtschaftliche Ballenpresse (10) mit einer Ballenpresskammer (26), die ein System (100) zur Schätzung der Länge von Ballen aus Erntegut (82) während der Ballenbildung aufweist, wobei der Ballen aus Erntegut (82) aus einer Mehrzahl von Ballenfüllungen (80) gebildet ist, die einzeln der Ballenpresskammer (26) zugeführt werden, wobei die landwirtschaftliche Ballenpresse (10) des Weiteren einen Kolben (32) aufweist, der dazu eingerichtet ist, relativ zu der Ballenpresskammer (26) in einer Ballenbildungsrichtung (31) betätigt zu werden, wenn jeweils eine Ballenfüllung (80) der Mehrzahl von Ballenfüllungen (80) der Ballenpresskammer (26) zugeführt wird, um jede Ballenfüllung (80) in den Ballen aus Erntegut (82) zu pressen, der innerhalb der Ballenpresskammer (26) gebildet wird,

wobei das System (100) **gekennzeichnet ist durch**;

einen radarbasierten Längensensor (102), der in wirkender Verbindung mit der Ballenpresskammer (26) vorgesehen ist, wobei der Längensensor (102) dazu eingerichtet ist, Radarwellen (104) in Richtung eines Ballens aus Erntegut (82) zu übertragen, der innerhalb der Ballenpresskammer (26) gebildet wird, und Rücklaufwellen (106) zu empfangen, die den Radarwellen (104) entsprechen, wenn diese von dem Ballen aus Erntegut (82) reflektiert werden; und

eine Steuereinheit (140), die kommunikativ mit dem Längensensor (102) gekoppelt ist, wobei die Steuereinheit (140) dazu eingerichtet ist, mindestens teilweise basierend auf den Radardaten, die den Rücklaufwellen (106) entsprechen, die von dem Längensensor (102) empfangen werden,

eine Bewegungsgeschwindigkeit des Ballens aus Erntegut (82) innerhalb der Ballenpresskammer (26) bei jeder Betätigung des Kolbens (30) relativ zu der Ballenpresskammer (26) in der Ballenbildungsrichtung (31) zu bestimmen, und

eine aktuelle Länge (84) des Ballens aus Erntegut (82), der innerhalb der Ballenpresskammer (26) gebildet wird, zu schätzen.

2. System (100) nach Anspruch 1, wobei bei jeder Ballenfüllung (80), die in den Ballen aus Erntegut (82) gepresst wird, der innerhalb der Ballenpresskammer (26) gebildet wird, die Steuereinheit (140) dazu eingerichtet ist, einen inkrementale Längenverstellungsabstand des Ballens aus Erntegut (82) innerhalb der Ballenpresskammer (26) mindestens teilweise basierend auf den Radardaten zu bestimmen.

3. System (100) nach Anspruch 2, wobei die Steuereinheit (140) dazu eingerichtet ist, die aktuelle Länge (84) des Ballens aus Erntegut (82) durch Summieren der inkrementalen Längenverstellungsabstände zu schätzen, die zu jeder Ballenfüllung (80) bestimmt wurden, die in den Ballen aus Erntegut (82) gepresst wird, der innerhalb der Ballenpresskammer (26) gebildet wird.

4. System (100) nach Anspruch 2, wobei der inkrementale Längenverstellungsabstand mindestens teilweise durch Berechnen eines Abstands bestimmt wird, um den der Ballen aus Erntegut (82) innerhalb der Ballenpresskammer (26) in der Ballenbildungsrichtung (31) relativ zu dem Längensensor (102) bewegt wird.

5. System (100) nach Anspruch 4, wobei die Steuereinheit (140) des Weiteren dazu eingerichtet ist, einen Abstand des Ballens aus Erntegut (82), der relativ zu dem Längensensor (102) bewegt wird, mindestens teilweise basierend auf der Bewegungsgeschwindigkeit zu berechnen, wobei die aktuelle Länge (84) des Ballens aus Erntegut (82) mindestens teilweise basierend auf dem berechneten Abstand geschätzt wird.

6. System (100) nach einem der vorhergehenden Ansprüche, wobei die Steuereinheit (140) des Weiteren dazu eingerichtet ist, die aktuelle Länge (84) des Ballens aus Erntegut (82) mit einem vorbestimmten Ballenlängengrenzwert zu vergleichen, wobei die Steuereinheit (140) dazu eingerichtet ist, einen Betrieb einer Knoteranordnung (33) der landwirtschaftlichen Ballenpresse (10) zum Wickeln und Knüpfen von Garn um den Ballen aus Erntegut (82) herum zu steuern, wenn die aktuelle Länge (84) des Ballens aus Erntegut (82) gleich oder größer als der vorbestimmte Ballenlängengrenzwert ist.

7. Verfahren (200) zur Bestimmung der Länge des Ballens aus Erntegut (82) während einer Ballenbildung innerhalb einer landwirtschaftliche Ballenpresse (10), wobei das Verfahren ein Bilden eines Ballens aus Erntegut (82) aus einer Mehrzahl von Ballenfüllungen (80) umfasst, die einzeln einer Ballenpresskammer (26) der landwirtschaftlichen Ballenpresse (10) zugeführt werden, wobei das Bilden des Ballens aus Erntegut (82) innerhalb der Ballenpresskammer (26) ein Betätigen eines Kolbens (30) relativ zu der Ballenpresskammer (26) in einer Ballenbildungsrichtung (31) aufweist, wenn jeweils eine Ballenfüllung (80) der Mehrzahl von Ballenfüllungen (80) der Ballenpresskammer (26) zugeführt wird, um jede der Ballenfüllungen (80), die der Ballenpresskammer (26) zugeführt werden, in den Ballen aus Erntegut (82) zu pressen, wobei das Verfahren (200) durch die folgenden Schritte gekennzeichnet ist:

   Übertragen von Radarwellen (104) in Richtung des Ballens aus Erntegut (82) innerhalb der Ballenpresskammer (26);
   Empfangen von Rücklaufwellen (106), die den Radarwellen (104) entsprechen, die von dem Ballen aus Erntegut (82) innerhalb der Ballenpresskammer (26) reflektiert werden; und
   Bestimmen einer Bewegungsgeschwindigkeit des Ballens aus Erntegut (82) mindestens teilweise basierend auf den Radardaten, die den Rücklaufwellen (106) entsprechen, die von dem Längensensor (102) empfangen wurden, innerhalb der Ballenpresskammer (26) bei jeder Betätigung des Kolbens (30) relativ zu der Ballenpresskammer (26) in der Ballenbildungsrichtung (31), und Schätzen einer aktuellen Länge (84) des Ballens aus Erntegut (82) innerhalb der Ballenpresskammer (26) mindestens teilweise basierend auf den Radardaten, die den empfangenden Rücklaufwellen (106) entsprechen.

8. Verfahren (200) nach Anspruch 7, wobei das Schätzen der aktuellen Länge (84) des Ballens aus Erntegut (82) innerhalb der Ballenpresskammer (26) bei jeder der Ballenfüllungen (80), die in den Ballen aus Erntegut (82) gepresst werden, ein Bestimmen eines inkrementalen Längenverstellungsabstands des Ballens aus Erntegut (82), der innerhalb der Ballenpresskammer (26) gebildet wird, mindestens teilweise basierend auf den Radardaten aufweist.

9. Verfahren (200) nach Anspruch 8, das des Weiteren ein Schätzen der aktuellen Länge (84) des Ballens aus Erntegut (82) durch Summieren der inkrementalen Längenverstellungsabstände aufweist, die zu jeder der Ballenfüllungen (80) gehören, die in den Ballen aus Erntegut (82) gepresst werden.

10. Verfahren (200) nach Anspruch 8, wobei das Bestimmen des inkrementalen Längenverstellungsabstands ein Berechnen eines Abstands mindestens teilweise auf den Radardaten basiert aufweist, um den der Ballen aus Erntegut (82)innerhalb der Ballenpresskammer (26) in der Ballenbildungsrichtung (31) bewegt wird .

11. Verfahren (200) nach einem der Ansprüche 7 bis 10, das des Weiteren ein Vergleichen der aktuellen Länge (84) des Ballens aus Erntegut (82) mit einem vorbestimmten Ballenlängengrenzwert und ein Steuern eines Betriebs einer Knoteranordnung (33) der landwirtschaftlichen Ballenpresse (10) zum Wickeln und Knüpfen des Garns um den Ballen aus Erntegut (82) herum aufweist, wenn die aktuellen Länge (84) des Ballens aus Erntegut (82) gleich oder größer als der vorbestimmte Ballenlängengrenzwert ist.

**Revendications**

1.  Presse à balles agricole (10) comprenant une chambre de mise en balles (26), comprenant un système (100) pour estimer la longueur des balles de matériau de récolte (82) pendant la formation de balles, dans laquelle la balle de matériau de récolte (82) est formée à partir d'une pluralité de charges de balles (80) livrées séparément dans la chambre de mise en balles (26), la presse à balles agricole (10) comprenant en outre un piston (30) configuré pour être actionné par rapport à la chambre de mise en balles (26) dans un sens de mise en balles (31) lorsque chaque charge de balles (80) de la pluralité de charges de balles (80) est livrée dans la chambre de mise en balles (26) pour comprimer chacune desdites charges de balles (80) dans la balle de matériau de récolte (82) formée à l'intérieur de la chambre de mise en balles (26), le système (100) étant **caractérisé par** ;

    un capteur de longueur à base de radar (102) fourni en association fonctionnelle avec la chambre de mise en balles (26), le capteur de longueur (102) étant configuré pour transmettre des ondes radar (104) vers une balle de matériau de récolte (82) formée dans la chambre de mise en balles (26) et recevoir des ondes de retour (106) correspondant aux ondes radar (104) telles que reflétées par la balle de matériau de récolte (82) ; et
    un dispositif de commande (140) couplé de manière communicative au capteur de longueur (102), le dispositif de commande (140) étant configuré pour, en se basant au moins en partie sur les données radar associées aux ondes de retour (106) reçues par le capteur de longueur (102),

    déterminer une vitesse de déplacement de la balle de matériau de récolte (82) à l'intérieur de la chambre de mise en balles (26) à chaque actionnement du piston (30) par rapport à la chambre de mise en balles (26) dans le sens de mise en balles (31), et
    estimer la longueur actuelle (84) de la balle de matériau de récolte (82) formée dans la chambre de mise en balles (26).

2.  Système (100) selon la revendication 1, dans lequel, lorsque chacune desdites charges de balle (80) est comprimée dans la balle de matériau de récolte (82) formée dans la chambre de mise en balles (26), le dispositif de commande (140) est configuré pour déterminer une distance d'ajustement de longueur incrémentielle de la balle de matériau de récolte (82) dans la chambre de mise en balles (26) en se basant au moins en partie sur les données radar.

3.  Système (100) selon la revendication 2, dans lequel le dispositif de commande (140) est configuré pour estimer la longueur actuelle (84) de la balle de matériau de récolte (82) en additionnant les distances d'ajustement de longueur incrémentielle déterminées en association avec chacune desdites charges de balle (80) qui est comprimée dans la balle de matériau de récolte (82) formée à l'intérieur de la chambre de mise en balles (26).

4.  Système (100) selon la revendication 2, dans lequel la distance d'ajustement de longueur incrémentielle est déterminée au moins en partie par le calcul d'une distance de déplacement de la balle de matériau de récolte (82) par rapport au capteur de longueur (102) à l'intérieur de la chambre de mise en balles (26) dans le sens de mise en balles (31).

5.  Système (100) selon la revendication 4, dans lequel le dispositif de commande (140) est en outre configuré pour calculer une distance à laquelle la balle de matériau de récolte (82) est déplacée par rapport au capteur de longueur (102) sur la base, au moins en partie, de la vitesse de déplacement, la longueur actuelle (84) de la balle de matériau de récolte (82) étant estimée sur la base, au moins en partie, de la distance calculée.

6.  Système (100) selon l'une quelconque des revendications précédentes, dans lequel le dispositif de commande (140) est en outre configuré pour comparer la longueur actuelle (84) de la balle de matériau de récolte (82) à un seuil de longueur de balle prédéterminé, le dispositif de commande (104) étant configuré pour commander une opération d'un ensemble de nouage (33) de la presse à balles agricole (10) pour enrouler et lier de la ficelle autour de la balle de matériau de récolte (82) lorsque la longueur actuelle (84) de la balle de matériau de récolte (82) est égale ou supérieure au seuil de longueur de balle prédéterminé.

7.  Procédé (200) d'estimation de la longueur des balles de matériau de récolte (82) pendant la formation de balles dans une presse à balles agricole (10), le procédé comprenant la formation d'une balle de matériau de récolte (82) à partir d'une pluralité de charges de balles (80) livrées séparément dans une chambre de mises en balles (26) de la presse à balles agricole (10), dans lequel la formation de la balle de matériau de récolte (82) dans la chambre de mise en balles (26) comprend l'actionnement d'un piston (30) par rapport à la chambre de mise en balles (26) dans un sens de mise en balles (31) à mesure que chaque charge de balle (80) de la pluralité de charges de balles (80) est livrée dans la chambre de mise en balles (26) pour comprimer chacune desdites charges de balle (80) dans la balle de matériau de récolte (82), le procédé (200) étant **caractérisé par** les étapes consistant à :

transmettre des ondes radar (104) en direction de la balle de matériau de récolte (82) dans la chambre de mise en balles (26) ;
recevoir des ondes de retour (106) correspondant aux ondes radar (104) reflétées par la balle de matériau de récolte (82) à l'intérieur de la chambre de mise en balles (26) ; et
en se basant au moins en partie sur les données radar associées aux ondes de retour (106) reçues par le capteur de longueur (102), déterminer une vitesse de déplacement de la balle de matériau de récolte (82) à l'intérieur de la chambre de mise en balles (26) à chaque actionnement du piston (30) par rapport à la chambre de mise en balles (26) dans le sens de mise en balles (31), et estimer une longueur actuelle (84) de la balle de matériau de récolte (82) à l'intérieur de la chambre de mise en balles (26) en se basant au moins en partie sur les données radar associées aux ondes de retour reçues (106).

8.  Procédé (200) selon la revendication 7, dans lequel l'estimation de la longueur actuelle (84) de la balle de matériau de récolte (82) dans la chambre de mise en balles (26) comprend la détermination, avec chacune desdites charges de balle (80) comprimée dans la balle de matériau de récolte (82), d'une distance d'ajustement de longueur incrémentielle de la balle de matériau de récolte (82) dans la chambre de mises en balles (26) sur la base, au moins en partie, des données radar.

9.  Procédé (200) selon la revendication 8, comprenant en outre l'estimation de la longueur actuelle (84) de la balle de matériau de récolte (82) en additionnant les distances d'ajustement de longueur incrémentielle déterminées en association avec chacune desdites charges de balle (80) comprimée dans la balle de matériau de récolte (82).

10. Procédé (200) selon la revendication 8, dans lequel la détermination de la distance d'ajustement de longueur incrémentielle comprend le calcul d'une distance de déplacement de la balle de matériau de récolte (82) à l'intérieur de la chambre de mise en balles (26) dans le sens de mise en balles (31) sur la base, au moins en partie, des données radar.

11. Procédé (200) selon l'une quelconque des revendications précédentes 7 à 10, comprenant en outre la comparaison de la longueur actuelle (84) de la balle de matériau de récolte (82) à un seuil de longueur de balle prédéterminé et la commande d'une opération d'un ensemble de nouage (33) de la presse à balles agricole (10) pour enrouler et lier de la ficelle autour de la balle de matériau de récolte (82) lorsque la longueur actuelle (84) de la balle de matériau de récolte (82) est égale ou supérieure au seuil de longueur de balle prédéterminé.

FIG. 1

**FIG. 2**

EP 3 834 603 B1

**FIG. 3**

EP 3 834 603 B1

*FIG. 4*

*FIG. 5*

EP 3 834 603 B1

FIG. 6

200

FORM A BALE OF CROP MATERIAL WITHIN A BALING CHAMBER OF AN AGRICULTURAL BALER — 202

TRANSMIT RADAR WAVES TOWARDS THE BALE OF CROP MATERIAL WITHIN THE BALING CHAMBER — 204

RECEIVE RETURN WAVES CORRESPONDING TO THE RADAR WAVES AS REFLECTED OFF THE BALE OF CROP MATERIAL WITHIN THE BALING CHAMBER — 206

ESTIMATE A PARAMETER ASSOCIATED WITH A CURRENT LENGTH OF THE BALE OF CROP MATERIAL WITHIN THE BALING CHAMBER BASED AT LEAST IN PART ON RADAR DATA ASSOCIATED WITH THE RECEIVED RETURN WAVES — 208

*FIG. 7*

**EP 3 834 603 B1**

**REFERENCES CITED IN THE DESCRIPTION**

**Patent documents cited in the description**

- AU 2010101429 A4

- WO 2014125029 A1